# EUROPÄISCHE PATENTANMELDUNG

(11) **EP 0 904 878 A2**
(43) Veröffentlichungstag der Anmeldung: **31.03.1999**
(21) Anmeldenummer: 98117803.1
(22) Anmeldetag: 19.09.1998
(51) Int. Cl.: B23F 23/04

(54) **Zahnräderbearbeitungsvorrichtung mit Werkstückbeförderungsvorrichtung**

(30) Priorität: 26.09.1997 DE 19742514
(71) Anmelder: Boecker & Herzog GmbH, 66386 St. Ingbert (DE)
(72) Erfinder: Die Erfindernennung liegt noch nicht vor
(74) Vertreter: Bernhardt, Winfrid, Dr.-Ing.

(57) **Zusammenfassung**

Die Erfindung betrifft eine Vorrichtung zur Bearbeitung von Zahnrädern mit einer Bearbeitungsstation, in der ein zu bearbeitendes Werkstückzahnrad (43) in einer Bearbeitungsposition zwischen mehreren, an verschiedenen Umfangspositionen in das Werkstückzahnrad (43) eingreifenden, drehbaren Bearbeitungszahnrädern (20-22) plazierbar ist, sowie mit einer Bewegungseinrichtung zum Befördern des Werkstückzahnrads in die Bearbeitungsposition. Vorteilhaft umfaßt in der erfindungsgemäßen Konstruktion die Bewegungseinrichtung eine zum Befördern des Werkstückzahnrads (43) in die Bearbeitungsposition in Richtung der Zahnraddrehachsen bewegbare Aufnahmeeinrichtung für das Werkstückzahnrad.

## Beschreibung

Die Erfindung betrifft eine Vorrichtung zur Bearbeitung von Zahnrädern, mit einer Bearbeitungsstation, in der ein zu bearbeitendes Werkstückzahnrad in einer Bearbeitungsposition zwischen mehreren, an verschiedenen Umfangspositionen in das Werkstückzahnrad eingreifenden drehbaren Bearbeitungszahnrädern plazierbar ist, sowie mit einer Bewegungseinrichtung zum Befördern des Werkstückzahnrads in die Bearbeitungsposition.

Aus der DE-PS 32 30 860 und der US-PS 3,321,820 sind derartige Bearbeitungsvorrichtungen für Zahnräder bekannt, bei denen die Bewegungseinrichtung zum Befördern des Werkstückzahnrads in die Bearbeitungsposition durch eine rinnenartige Rutsche gebildet ist, in welcher sich die Zahnräder in einer zu ihren Stirnseiten parallelen Ebene bewegen. Um für die Bewegung des über die Rutsche herangeführten Werkstückzahnrads in die Bearbeitungsposition Platz zu schaffen, wird eines von drei im Dreieck angeordneten Bearbeitungszahnrädern geeignet verschoben, wobei über dieses hin- und herverschiebbare Bearbeitungszahnrad das Werkstückzahnrad dann bei der Bearbeitung gegen die anderen Bearbeitungszahnräder gedrückt wird.

Es ist die Aufgabe der Erfindung, eine neue Vorrichtung der obengenannten Art zu schaffen, welche gegenüber den bekannten derartigen Vorrichtungen bei konstruktiver Vereinfachung in bezug auf die Möglichkeiten zur Werkstückzuführung verbessert ist.

Die diese Aufgabe lösende Vorrichtung nach der Erfindung ist dadurch gekennzeichnet, daß die Bewegungseinrichtung eine zum Befördern des Werkstückzahnrades in die Bearbeitungsposition in Richtung der Zahnraddrehachsen bewegbare Aufnahmeeinrichtung für das Werkstückzahnrad umfaßt.

In einer bevorzugten Ausführungsform der Erfindung weist die Aufnahmeeinrichtung eine Anlagefläche, insbesondere eine Auflagefläche, auf, gegen welche das Werkstückzahnrad stirnseitig anlegbar ist, wobei die Anlagefläche eben oder z.B. mit einer das Werkstückzahnrad zentrierenden Formung versehen und als Stirnfläche eines zur Bewegung des Werkstückzahnrads bewegbaren Stempels ausgebildet sein kann. Der Stempel ist vorzugsweise als Hubstempel ausgebildet, über den ein Werkstückzahnrad von einer Ausgangsposition in die Bearbeitungsposition angehoben wird.

In einer weiteren bevorzugten Ausführungsform der Erfindung liegt in der Bearbeitungsposition das Werkstückzahnrad mit einer Stirnseite gegen die Anlagefläche und mit seiner anderen Stirnseite an einer Gegenanlagefläche an, und es ist eine Einrichtung zur Hin- und Herbewegung des Werkstückzahnrades an der Bearbeitungsposition in Richtung der Zahnraddrehachsen vorgesehen. In einer bevorzugten Ausführungsform ist die Gegenanlagefläche als Stirnfläche eines über einen Exzenterantrieb oder einen Kurbelantrieb hin- und herbewegbaren Stempels ausgebildet und die Anlagefläche ist gegen das Werkstückzahnrad bzw. Gegenanlagefläche vorzugsweise über eine Feder vorgespannt. Bei letzterer Ausführungsform ist vorteilhaft die Einrichtung zur Hin- und Herbewegung des Werkstücks mit der das Werkstück in die Bearbeitungsposition befördernden Bewegungseinrichtung kombiniert, indem die Aufnahmeeinrichtung für das Werkstückzahnrad, die zur Beförderung des Werkstückzahnrads in die Bearbeitungsposition verwendet wird, als Teil der Einrichtung zur Hin- und Herbewegung des Werkstückzahnrads an der Bearbeitungsposition wirksam wird.

Vorzugsweise ist die Spannfeder zwischen einem die Anlagefläche aufweisenden Stempelkopfteil und einem Stempelführungsteil angeordnet.

In einer weiteren bevorzugten Ausführungsform der Erfindung weist die Bewegungseinrichtung eine Transporteinrichtung zum Antransport von Werkstückzahnrädern in eine bei einer Bearbeitungsstation gelegene Ausgangsposition, von wo aus die Weiterbeförderung in der genannten axialen Richtung in die Bearbeitungsposition erfolgt, auf, wobei die Transporteinrichtung insbesondere zum Antransport der Werkstücke auf einem Transportweg vereinzelt im Abstand zueinander vorgesehen ist und wobei entlang dem Transportweg entsprechend dem Abstand mehrere Bearbeitungsstationen angeordnet sind. In einer solchen Anordnung können effizient mehrere Werkstückzahnräder gleichzeitig bearbeitet werden, wobei einzelne Zahnräder vorteilhaft auch stufenweise unter Verwendung unterschiedlicher Sätze von Bearbeitungszahnrädern an verschiedenen Bearbeitungsstationen in unterschiedlichen Bearbeitungsstufen behandelt werden können.

Zweckmäßig ist die Transporteinrichtung mit Einrichtungen zur Fixierung des gegenseitigen Abstands der Werkstückzahnräder versehen, wobei in einer bevorzugten, einen Drehträger verwendenden Transporteinrichtung diese Abstandsfixiereinrichtungen jeweils durch zentrierende Auflageflächen eines Hubstempels gebildet sein können, welche in an dem Drehträger vorgesehenen über einen Kreisumfang verteilt angeordneten Führungen gelagert sind oder durch auf dem Drehträger angeordnete, zur Anpassung an unterschiedliche Werkstückzahnradgrößen vorzugsweise austauschbare Taschen gebildet sind.

In einer weiteren bevorzugten Ausführungsform ist an der Bearbeitungsstation unterhalb der Einrichtung für den Antransport der Werkstückzahnräder eine zum Befördern des Werkstückzahnrades in die Bearbeitungsposition am Stempel angreifende Antriebseinrichtung angeordnet. Während mehrere Stempel in den Führungen verteilt über den Kreisumfang angeordnet sind, ist eine Stempelantriebseinrichtung bei dieser Ausführungsform jeweils nur an einer Bearbeitungsposition vorgesehen.

In einer weiteren bevorzugten Ausführungsform der Erfindung sind die Bearbeitungszahnräder in einem an der Bearbeitungsstation lösbar montierten Wechselrahmen gelagert. Durch die Verwendung solcher Wechselrahmen kann die Maschine je nach Bearbeitungsaufgabe schnell und unkompliziert mit die erforderlichen Sätze von Bearbeitungszahnrädern enthaltenden Rahmen bestückt werden.

In einer bevorzugten einfachen Konstruktion umfaßt der Wechselrahmen eine Halterungsplatte zur einseitigen Lagerung der Bearbeitungszahnräder, wobei in der Halterungsplatte eine zentrale Öffnung für den Eingriff des die Gegenanlagefläche aufweisenden Stempels vorgesehen ist.

In dem Wechselrahmen ist eines von drei gelagerten Bearbeitungszahnrädern in einer Richtung senkrecht zu seiner Drehachse verschiebbar, um das Werkstückzahnrades in der Bearbeitungsposition gegen die anderen Bearbeitungszahnräder drücken zu können. Vorzugsweise wird dieses verschiebbare Zahnrad gleichzeitig als Antriebszahnrad für die Bearbeitung verwendet, so daß eine entsprechende Antriebseinrichtung und eine Bewegungseinrichtung für die Verschiebung des Zahnrades an einer gemeinsamen Halterung vorgesehen werden können.

Vorzugsweise ist eines von drei in dem Wechselrahmen gelagerten Bearbeitungszahnrädern kardanisch gelagert.

Gemäß einer weiteren Ausführungsform der Erfindung sind an einer Bearbeitungsstation zur Anpassung an unterschiedliche Werkstückzahnradgrößen mehrere, eine Anlagefläche und Gegenanlagefläche bildende Stempelpaare vorgesehen und die Stempel der Paare wahlweise an die Hubantriebseinrichtung zum Befördern des Werkstückzahnrads in die Bearbeitungsposition sowie an die Einrichtung zur Hin- und Herbewegung des Werkstückzahnrads an der Bearbeitungsposition ankoppelbar. Durch diese Maßnahme kann die Maschine kurzfristig zur Bearbeitung an unterschiedlich große Werkstückzahnräder angepaßt werden.

Eine weitere Ausführungsform der Erfindung sieht vor, daß eines von drei Bearbeitungszahnrädern an einem zum Befördern dieses Zahnrads in Eingriff mit dem Werkstückzahnrad schwenkbaren Hebel gelagert ist und die anderen Bearbeitungszahnräder an einer Trägerhalterung, die zum Eingriff mit dem Werkstückzahnrad linear über einen mit dem Hebel zusammenarbeitenden Kniehebel verschiebbar ist, gelagert sind.

Die Erfindung soll nun anhand von Ausführungsbeispielen und der beiliegenden, sich auf ein Ausführungsbeispiel beziehenden Zeichnungen näher erläutert und beschrieben werden. Es zeigen:
- Fig. 1: ein Ausführungsbeispiel für eine erfindungsgemäße Bearbeitungsvorrichtung für Zahnräder in einer teilweise geschnittenen Seitenansicht,
- Fig. 2: die Vorrichtung von Fig. 1 in einer Draufsicht,
- Fig. 3: einen Ausschnitt aus der Seitenansicht von Fig. 1,
- Fig. 4: ein weiteres Ausführungsbeispiel für eine erfindungsgemäße Bearbeitungsvorrichtung in einer Teilseitenansicht,
- Fig. 5: das Ausführungsbeispiel von Fig. 4 in einem die Bearbeitungszahnräder enthaltenden Horizontalschnitt, und
- Fig. 6: das Ausführungsbeispiel von Fig. 4 und 5 in einer Draufsicht.

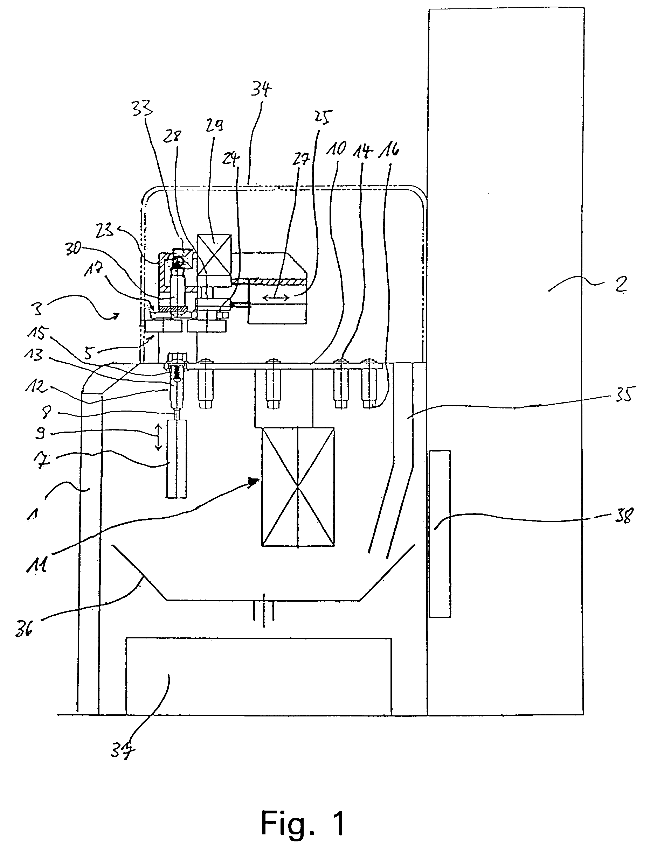

Mit dem Bezugszeichen 1 ist in der Fig. 1 ein Trägertisch bezeichnet, der benachbart zu einem elektrische Schalt- und Steuereinrichtungen aufnehmenden Schrank 2 angeordnet ist und zur Aufnahme einer allgemeinen mit 3 bezeichneten Vorrichtung zur Bearbeitung von Zahnrädern dient.

Das Bezugszeichen 4 weist auf ein Bedienpult hin. In dem Schrank 2 ist eine nicht gezeigte Monitoreinrichtung untergebracht, über welche z.B. Angaben zur Bedienerführung darstellbar sind.

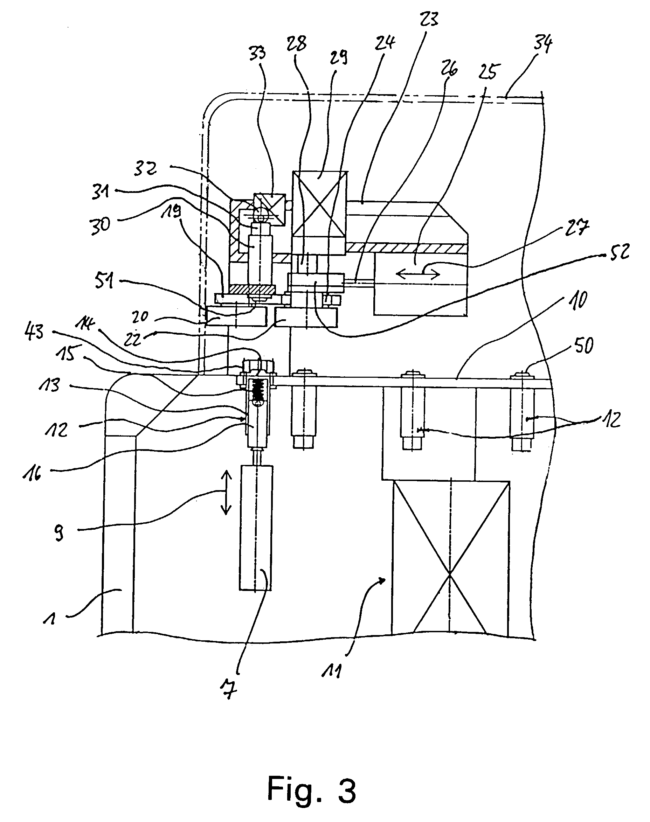

Die Zahnradbearbeitungsvorrichtung 3 umfaßt zwei Bearbeitungsstationen 5 und 6, von denen in der Seitenansicht von Fig. 1 und 3 nur die Bearbeitungsstation 5 sichtbar ist.

Unterhalb jeder Bearbeitungsstation ist ein pneumatischer Hubzylinder 7 mit einer Kolbenstange 8 angeordnet welche in den durch den Pfeil 9 angezeigten Richtungen bewegbar ist.

Mit der Bezugszahl 10 ist in den Figuren eine über eine Motorgetriebeeinheit 11 taktweise drehbare Platte bezeichnet, an welcher über einen Kreisumfang gleichmäßig verteilt sechs Führungen 12 mit darin verschiebbaren Hubstempeln 13 angeordnet sind. Die Stempel 13 weisen einen mit einer Auflagestirnfläche 50 versehenen Stempelkopfteil 14 auf, welcher über eine Feder 15 gegen ein gegen die Führung 12 innenseitig anliegendes Führungsteil 16 abgefedert ist.

Mit den Bezugszahlen 17 und 18 sind Wechselrahmen bezeichnet, die jeweils eine Trägerplatte 19 aufweisen, an denen einseitig Bearbeitungszahnräder 20 bis 22 drehbar gelagert sind. Die Wechselrahmen 17 und 18 sind unter Herstellung einer lösbaren Verbindung in einen nur in Fig. 1 gezeigten Halterungsrahmen 23 einschiebbar. Von den drehbar gelagerten Bearbeitungszahnrädern 20 bis 22 ist das Zahnrad 21 kardanisch gelagert und das Zahnrad 22 in einem Langloch 24 innerhalb der Trägerplatte 19 und einer Führung 52 über einen Druckzylinder 25 mit einer Kolbenstange 26 entsprechend dem Pfeil 27 senkrecht zu seiner Drehachse hin und her verschiebbar. Das Bearbeitungszahnrad 22 ist über eine in den Figuren nicht sichtbare Polygonsteckkupplung mit einer Antriebswelle 28 eines Antriebsmotors 29 verbunden, wobei die Antriebswelle und der Antriebsmotor 29 über die Kolbenstange 26 zusammen mit dem Zahnrad 22 hin- und herbewegbar sind. In dem gezeigten Ausführungsbeispiel ist das Bearbeitungszahnrad 22 derart an der Trägerplatte 19 vertikal verschieblich angebracht, daß es nach Einschieben des Wechselrahmens in den Träger 23 zur Herstellung der Kupplungsverbindung mit der Antriebswelle 28 angehoben und durch die nicht gezeigte Schraube befestigt werden kann.

Das über eine Polygonsteckkupplung an die Antriebswelle 28 angeschlossene Bearbeitungszahnrad 22 ist an der Antriebswelle 28 durch eine nicht gezeigte zentrale Schraube befestigt.

Mit der Bezugszahl 30 ist eine an dem Rahmen 23 befestigte Führung bezeichnet, in der ein Stempel 31 geführt ist, welcher eine Stirnfläche 51 aufweist, die in gleicher Weise wie die Stirnfläche 50 der Stempelköpfe 14 geformt ist. Auf die der geformten Stirnfläche 51 gegenüberliegende Stirnfläche des Stempels 31 wirkt eine Umfangsfläche eines Exzenters 32 ein, welcher über einen Motor 33 zur Drehung antreibbar ist.

Mit dem Bezugszeichen 34 ist in den Fig. 1 und 3 eine Abdeckschutzhaube bezeichnet. In dem durch die Abdeckschutzhaube 34 abgedeckten Raumbereich befinden sich nicht gezeigte Einrichtungen für die Abgabe von Bearbeitungsflüssigkeiten, insbesondere Kühlund Schmierflüssigkeit. Mit 35 ist eine Flüssigkeitsablaufführung zur Ableitung von verbrauchter Bearbeitungsflüssigkeit in eine Auffangleiteinrichtung 36 bezeichnet, von wo aus die Flüssigkeit in eine ein Absenkbecken umfassende Auffangwanne 37 gelangt. Bei 38 ist schematisch eine Druckquelle für die Druckylinder 7 und 25 dargestellt.

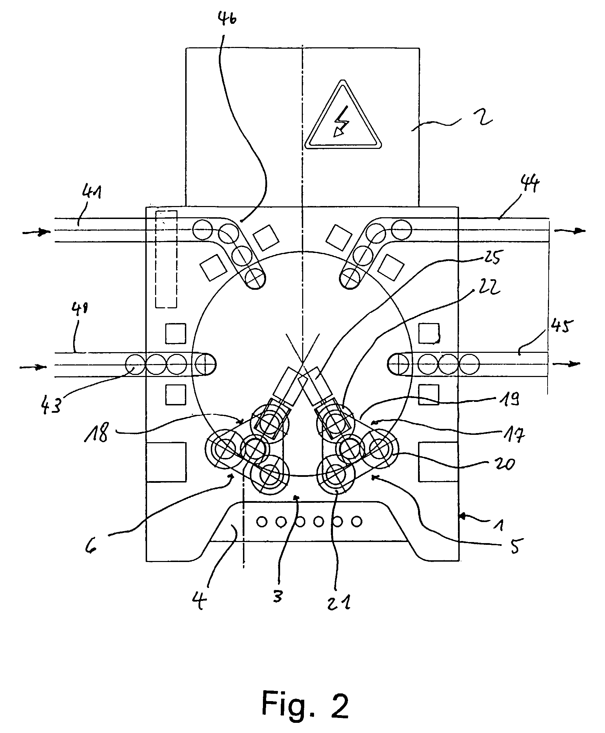

Mit den Bezugszeichen 40 und 41 sind in der Fig. 2 Zuführungen für Werkstückzahnräder 43 bezeichnet, über die Werkstückzahnräder auf die Drehplatte 10 gelangen. Zur Abführung von Werkstücken 43 von der Drehplatte 10 sind Abführungseinrichtungen 44 und 45 vorgesehen. Jede der Zuführungs- und Abführungseinrichtungen 40,41,44,45 weist angrenzend an die Drehplatte 10 eine Vereinzelungseinrichtung 46 auf. Auf der Drehplatte 10 sind nicht gezeigte Führungsanschläge zur sicheren Plazierung der Zahnräder 43 auf den Auflageflächen 50 vorgesehen.

Im folgenden wird die Funktionsweise der anhand der Fig. 1 bis 3 beschriebenen Bearbeitungsvorrichtung für die Zahnräder 43 erläutert.

Über die Zuführungen 40 und 41 angelieferte Werkstückzahnräder 43 werden bei den Vereinzelungseinrichtungen 46 auf die Drehplatte 10 geführt und mit einer Stirnfläche auf den Auflageflächen 50 der Stempelköpfe 14 plaziert. Durch die Formung der Auflagefläche 50 mit einem in die Zahnradachsbohrung vorstehenden Teil sind die Zahnräder auf den jeweiligen Stempelköpfen 14 zentriert angeordnet.

Gesteuert durch eine nicht gezeigte, in dem Schrank 2 untergebrachte Steuereinrichtung wird die Drehplatte 10 dann über die Motorgetriebeeinheit 11 um zwei Takte weitergedreht, d.h. um zweimal den Winkelabstand zwischen den auf der Drehplatte 10 angeordneten Werkstückzahnrädern 43. Auf diese Weise gelangt ein über die Zuführung 40 auf der Drehplatte 10 abgelegtes Werkstückzahnrad 43 in eine Ausgangsposition unter der Bearbeitungsstation 5. Ein über die Zuführung 41 der Drehplatte 10 zugeführtes Werkstückzahnrad gelangt unter die Bearbeitungsstation 6.

Die Bearbeitungsstationen können Sätze unterschiedlicher Bearbeitungszahnräder 20 bis 22 aufweisen, so daß über die Zuführungen 40 und 41 zugeführte, ggf. unterschiedliche Werkstückzahnräder unterschiedlich bearbeitet werden.

Um die Zahnräder in die Bearbeitungsposition zu heben, wird der Druckzylinder 7 betätigt, dessen Kolbenstange 8 an dem Führungsteil 16 des Stempels 13 angreift und den Stempel 13 mit dem aufsitzenden Werkstückzahnrad 43 in eine Position zwischen den Bearbeitungszahnrädern 20 bis 22 hebt. In dieser Position kommt das Bearbeitungszahnrad 43 mit seiner der Auflagefläche 50 abgewandten Stirnseite in Anlage gegen die Gegenanlagefläche 51 des Stempels 31.

Vor einer Bearbeitung des Werkstückzahnrads 43 wird das Bearbeitungszahnrad 22 über den Druckzylinder 25 gegen die weiteren Bearbeitungszahnräder 20 und 21 gedrückt. Dann werden die Antriebsmotoren 29 und 33 in Betrieb gesetzt, wobei der Antriebsmotor 29 das Bearbeitungszahnrad 22 zur Drehung antreibt und durch diesen Drehantrieb eine Drehung des Werkstückzahnrads 23 und der weiteren drehbar gelagerten Bearbeitungszahnräder 20 und 21 bewirkt. Durch die Drehung der durch den Motor 33 angetriebenen Exzenter 32 wird der Stempel 31 zusammen mit dem Hubstempel 13 und dem Werkstückzahnrad 43 hin und her bewegt, wobei die Feder 15 in dem Stempel 13 für eine solche Vorspannung sorgt, daß der Stempel 31 während seiner Hin- und Herbewegung ständig in Anlage gegen den Exzenter 32 verbleibt.

Durch die Drehung des Werkstückzahnrads 43 im Eingriff mit den Bearbeitungszahnrädern 20 bis 22 unter gleichzeitiger Hin- und Herbewegung über die Stempel 13 und 31 wird eine gewünschte Glättung insbesondere der Zahnflanken der Zähne des Werkstückzahnrads 43 erreicht.

Die Frequenz der vertikalen Hin- und Herbewegung des Werkstückzahnrads 43 ist in dem gezeigten Ausführungsbeispiel fest vorgegeben. Die Bearbeitungszeit und der Anpreßdruck durch die Bearbeitungszahnräder 20 bis 22 ist dagegen nach Bedarf einstellbar.

Über das im Bearbeitungsbereich unter der Abdeckhaube 34 installierte nicht gezeigte Kühl- und Schmiersystem wird eine konstante Temperatur der Glätträder aufrechterhalten und Bearbeitungsrückstände werden zuverlässig abgeführt. Durch diese Maßnahmen wird insbesondere eine hohe Konstanz der Bearbeitungsgenauigkeit erreicht.

Nach der Bearbeitung werden die Werkstückzahnräder 43 über den Druckzylinder 7 abgesenkt, nachdem die Motoren 29 und 33 abgeschaltet und das Bearbeitungszahnrad 22 über den Druckzylinder 25 von dem Werkstückzahnrad 43 zurückgezogen worden ist.

Nun erfolgt über die Motorgetriebeeinheit 11 wieder eine Drehung der Drehplatte 10 um zwei Takte, so daß die bearbeiteten Zahnräder in eine Ausgangsposition vor den Abführungseinrichtungen 44 und 45 gelangen von wo aus automatisch der Abtransport der bearbeiteten Werkstückzahnräder 43 erfolgt.

Die gezeigte Maschine ist insbesondere zur Nachbearbeitung von wegen Beschädigung ausgesonderten Werkstückzahnrädern geeignet und für einen Dreischichtbetrieb ausgelegt.

Durch die Verwendung auswechselbarer Wechselrahmen 17,18 mit unterschiedlichen Sätzen von Bearbeitungszahnrädern können bei dem gezeigten Ausführungsbeispiel Umrüstungen innerhalb von wenigen Minuten vorgenommen werden.

Die gezeigte Maschine kann mit einem Teile- und Richtungserkennungssystem ausgerüstet werden, welches gewährleistet, daß nur Werkstückzahnräder, auf welche die Maschine jeweils eingerichtet ist, seitenrichtig zugeführt werden. Darüber hinaus kann eine Positionsüberwachung vorgesehen sein, durch die z.B. der exakte Sitz der Teile auf den Anlageflächen 50 der Stempel 13 kontrolliert und die Maschine stillgesetzt wird, wenn sich die Teile nicht in der vorgesehenen Anordnungsposition befinden.

Havarien können z.B. durch eine an dem Schrank 2 angebrachte Störanzeigelampe kenntlich gemacht werden.

Die über das nicht gezeigte Kühl- und Schmiersystem zur Kühlung, Schmierung und Reinigung benutzte Flüssigkeit wird über die Leiteinrichtungen 35 und 36 der Auffangwanne 37 zugeführt, wo über ein Späneextraktionssystem eine Regenerierung der Flüssigkeit erfolgt. Hierbei werden durch einen Bandfilterautomaten mit einer Magnetfilterwalze die aufgenommen Schmutzpartikel ausgesondert. Dabei kann die Füllmenge des Vorratsbehälters automatisch überwacht und bei Erreichen einer einstellbaren Mindestmenge automatisch eine Störmeldung ausgegeben und die Maschine stillgesetzt werden.

Bei der gezeigten Ausführungsform gemäß Fig. 1 bis 3 kann es durch ungeeignete Zahnstellung der Bearbeitungszahnräder zu einer Behinderung des Werkstückzahnrads bei seiner Anhebung in die Bearbeitungsposition kommen. Um dies zu verhindern, könnte der Hubstempel 13 horizontal verschiebbar vorgesehen werden, wobei während dessen Verschiebung das angehobene Werkstückzahnrad 43 durch das Bearbeitungszahnrad 22 den Bearbeitungszahnrädern 20 und 21 zugeführt wird.

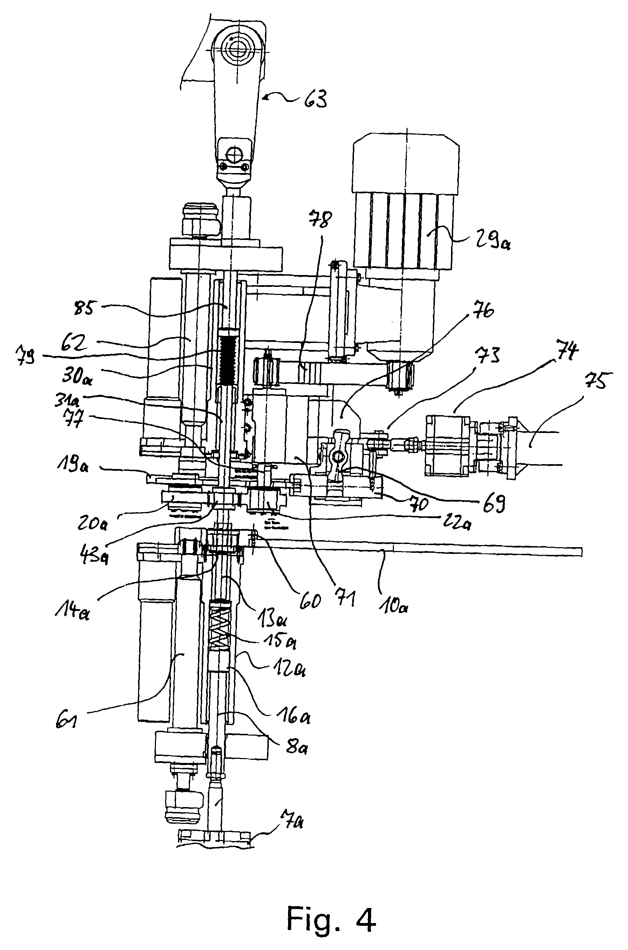

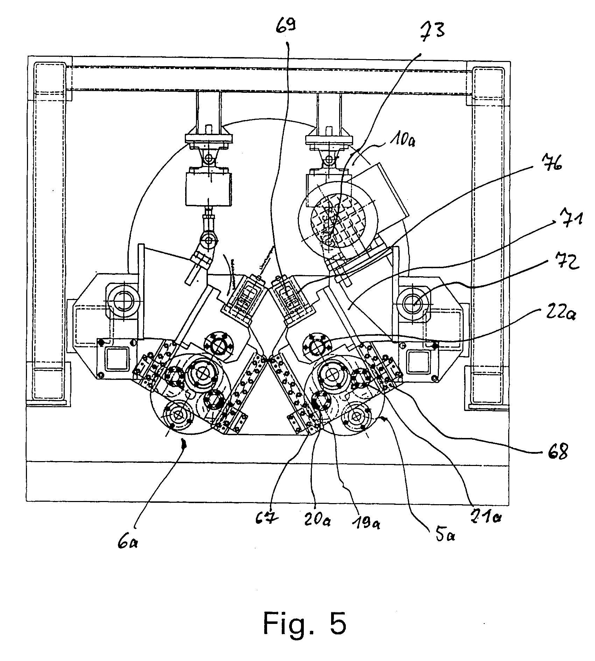

Es wird nun auf die Fig. 4 bis 6 Bezug genommen, wo ein weiteres Ausführungsbeispiel für eine erfindungsgemäße Zahnradbearbeitungsvorrichtung beschrieben ist. Gleiche oder gleichwirkende Teile sind mit derselben, jedoch mit dem Buchstaben a versehenen Bezugszahl wie bei dem vorangehenden Ausführungsbeispiel bezeichnet.

Das Ausführungsbeispiel gemäß den Fig. 4 bis 6 unterscheidet sich von dem vorangehenden Ausführungsbeispiel unter anderem dadurch, daß an einer Drehplatte 10a nicht Hubstempel, sondern nur Taschen 60 für die Aufnahme von zugeführten, zu bearbeitenden Zahnrädern 43a vorgesehen sind. Zur Anpassung an unterschiedliche Zahnraddurchmesser sind unterschiedlich bemessene Taschen vorgesehen, die zum Umrüsten der Bearbeitungsvorrichtung austauschbar sind. Jeweils an Bearbeitungsstationen 5a und 6a sind insgesamt vier, eine ebene Auflagefläche für ein Werkstückzahnrad aufweisende Hubstempel 13a mit Führungen 12a vorgesehen, welche durch eine nicht gezeigte Bewegungseinrichtung um eine Drehachse 61 drehbar sind, wobei wahlweise ein jeweiliger Hubstempel 13a mit seiner Führung 12a an einen Zylinder 7a mit einer Kolbenstange 8a angekoppelt werden kann. Ausgerichtet zu den Taschen 60 sind in der Drehplatte 10a jeweils Öffnungen für den Durchtritt des Hubstempels 13a vorgesehen. Die Kolbenstange 8a greift jeweils in die Führung 12a unter Anlage gegen ein Führungsteil 16a des Hubstempels 13a ein. Das Führungsteil 16a ist über eine Feder 15a gegen ein Stempelkopfteil 14a abgefedert.

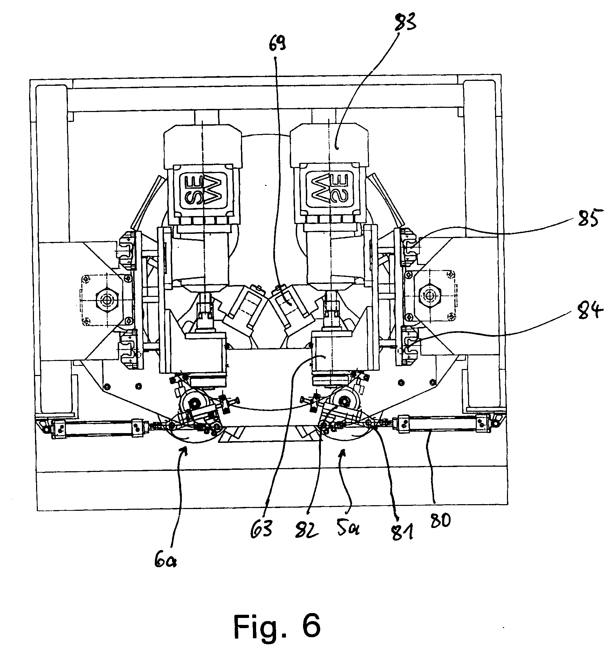

Entsprechend den vier Hubstempeln 13a sind in der in den Fig. 4 bis 6 gezeigten Ausführungsform an jeder Bearbeitungsstation 5a und 6a jeweils vier, eine ebene Werkstückzahnradauflagefläche aufweisende Gegenstempel 31a mit Führungen 30a vorgesehen, welche um eine Achse 62 drehbar sind und wahlweise an eine Kurbelschwingbewegungseinrichtung 63 ankoppelbar ist, wobei eine in die Führung 30a eingreifende Schubstange 85 des Kurbelantriebs 63 zur Anlage gegen den Stempel 31a kommt. Eine zur Drehung der Stempel 31a um die Achse 62 verwendete Bewegungseinrichtung wird anhand der Fig. 6 noch genauer erläutert.

Jede der Bearbeitungsstationen 5a und 6a weist eine als Wechselrahmen ausgebildete Trägerplatte 19a auf, an welcher Bearbeitungszahnräder 20a und 21a kardanisch gelagert sind. Die Trägerplatte 19a ist entlang von Trägerschienen 67 und 68 linear über einen Kniehebel 69 verschiebbar, welcher in einer Ausnehmung eines an die Trägerplatte 19a angelenkten Teils 70 eingreift.

Ein drittes Bearbeitungszahnrad 22a der jeweiligen Bearbeitungsstationen 5a und 6a ist an einem Hebel 71 gehaltert, welcher um eine Achse 72 über einen bei 73 an den Hebel angelenkten Kraftzylinder 74 schwenkbar ist. Der Kraftzylinder 74 ist seinerseits an eine Halterung 75 angelenkt. Der Hebel 71 weist ein Eingriffsteil 76 auf, welches mit dem Kniehebel 69 auf der dem Teil 70 gegenüberliegenden Seite seines Drehpunkts im Eingriff steht.

Das Bearbeitungszahnrad 22a ist an einer auf dem Hebel 71 gelagerten Antriebswelle 77 montiert, welche über einen Zahnriementrieb 78 durch einen ebenfalls an dem Hebel 71 angebrachten Motor 29a angetrieben wird.

Der jeweilige Stempel 31a ist gegen seine Führung 30a durch eine Feder 79 abgefedert.

Es wird nun insbesondere auf Fig. 6 Bezug genommen, wo mit dem Bezugszeichen 80 ein bei jeder Bearbeitungsstation 5a, 6a vorgesehener Druckzylinder bezeichnet ist. Der Druckzylinder 80 ist bei 81 an einen Schwenkantrieb 82 angelenkt, welcher in Verbindung mit den um die Achse 62 drehbaren Stempeln 31a bzw. deren Führungen 30a steht. Über den Druckzylinder 80 kann der Schwenkantrieb um etwa 90° verdreht werden. Der Schwenkantrieb 81 ist seinerseits um ± 90° drehbar, so daß jeder der vier Stempel 31a in die Arbeitsposition gebracht werden kann.

Mit dem Bezugszeichen 83 ist ein je Bearbeitungsstation 5a, 6a vorgesehener Antriebsmotor bezeichnet, der mit dem Kurbelantrieb 63 in Verbindung steht.

Der Motor 83 und der Kurbelantrieb 63 sind zusammen an Vertikalführungen 84 und 85 gehaltert und entlang dieser Führungen vertikal über nicht gezeigte Druckzylinder verschiebbar und in verschiedenen Höhen arretierbar.

Dem Druckzylinder 80 und dem Schwenkantrieb 82 entsprechende Einrichtungen zum Drehen der vier Stempel 13a um die Drehachse 61 sind in den Figuren nicht gezeigt.

Im folgenden wird die Funktionsweise der anhand der Fig. 4 bis 6 beschriebenen Bearbeitungsvorrichtung für Zahnräder erläutert.

Über nicht gezeigte, den Einrichtungen 40, 41 entsprechende Zuführungseinrichtungen werden Werkstückzahnräder zugeführt, wobei die Drehplatte 10a mit den Durchmessern der Zahnräder angepaßten Taschen 60 versehen ist.

Mit der Drehung der Drehplatte 10a kann jeweils ein Zahnrad in eine der Bearbeitungsstationen 5a, 6a bewegt werden. Entsprechend der Zahnradgröße wurden über die Bewegungseinrichtungen 80 und 82 für die Stempel 31a und die nicht gezeigten Bewegungseinrichtungen für die Stempel 13a aus den vier Stempeln ein dem jeweiligen Zahnrad in der Größe des Stempelkopfes angepaßter Stempel ausgewählt.

Über den Hubzylinder 7a wird der ausgewählte Stempel 13a angehoben, wobei er das zu bearbeitende Zahnrad 43a aus der Tasche 60 heraushebt und in die Bearbeitungsposition zwischen den Zahnrädern 20a bis 22a bringt.

Die zunächst noch von dem Werkstückzahnrad 43a entfernten Bearbeitungszahnräder 20a bis 22a werden nun in Eingriff mit dem Werkstückzahnrad 43a gebracht, indem über den Druckzylinder 74 der Hebel 71 verschwenkt und damit das Bearbeitungszahnrad 22a in Richtung zu dem Werkstückzahnrad 43a bewegt wird. Über den Kniehebel 69 wird gleichzeitig die Trägerplatte 19a entlang den Führungsschienen 67 und 68 linear bewegt, wodurch gleichzeitig mit dem Zahnrad 22a auch die Bearbeitungszahnräder 20a und 21a in Eingriff mit dem Werkstückzahnrad 43a gelangen.

Beim Anheben des Werkstückzahnrads 43a über den Hubzylinder 7a, der auf den Stempel 13a einwirkt, gelangt das Werkstückzahnrad 43a in Anlage gegen den Stempel 31a.

Zur Bearbeitung des Werkstückzahnrads 43a zwischen den Bearbeitungszahnrädern 20a bis 22a wird der Antriebsmotor 29a in Gang gesetzt, welcher über den Zahnriemenantrieb 78 und die Welle 77 das an die Welle 77 angekoppelte Bearbeitungszahnrad 22 dreht. Gleichzeitig wird der Motor 83 in Betrieb genommen, welcher über die Kurbeleinrichtung 63 für eine Schwingbewegung des gegen das Werkstückzahnrad 43 anliegenden Stempels 31a sorgt, wobei diese Schwingbewegung auf das Bearbeitungszahnrad 43a und den durch die Feder 15a vorgespannten, gegen das Werkstückzahnrad 43a andrückenden Stempel 13a übertragen wird. Die Feder 79 sorgt dabei für eine gewisse Dämpfung der Federbewegung des Stempels 31a.

Nach der Zahnradbearbeitung wird über den Druckzylinder 74 der Hebel 71 in entgegengesetzter Richtung verschwenkt, wobei die Bearbeitungszahnräder 20a bis 22a aus dem Eingriff mit dem Werkstückzahnrad 43 gebracht werden, wobei das Zahnrad 22a durch den Hebel 71 auf einer Kreisbahn und der Zahnräder 20a und 21a linear entlang der Führung 67 und 68 bewegt werden.

Danach wird das Werkstückzahnrad 43a über den Hubzylinder 7a mit dem Stempel 13a abgesenkt, bis es mit seinem Rand auf der Drehplatte 10a aufliegt und durch Drehung der Drehplatte 10a aus der Bearbeitungsstation entfernt werden kann.

Durch die Möglichkeit der Höhenverstellung der Stempel 31a können Zahnradbearbeitungen in unterschiedlichen Höhen über der Drehplatte 10a durchgeführt und so z.B. Mehrfachzahnräder, die entlang ihrer Drehachse verschiedene Zahnungen aufweisen, bearbeitet werden. Andererseits können die Antriebsmotoren 83 mit der Kurbeleinrichtung 63 soweit angehoben werden, daß die Schubstange 85 aus der Führung 30a herausgezogen und somit Bewegungsfreiheit für einen Stempelwechsel gegeben ist.

## Patentansprüche

1. Vorrichtung zur Bearbeitung von Zahnrädern, mit einer Bearbeitungsstation (5,6), in der ein zu bearbeitendes Werkstückzahnrad (43) in einer Bearbeitungsposition zwischen mehreren, an verschiedenen Umfangspositionen in das Werkstückzahnrad (43) eingreifenden, drehbaren Bearbeitungszahnrädern (20-22) plazierbar ist, sowie mit einer Bewegungseinrichtung zum Befördern des Werkstückzahnrads (43) in die Bearbeitungsposition,
dadurch gekennzeichnet,
daß die Bewegungseinrichtung eine zum Befördern des Werkstückzahnrads (43) in die Bearbeitungsposition in Richtung der Zahnraddrehachsen bewegbare Aufnahmeeinrichtung für das Werkstückzahnrad umfaßt.

2. Vorrichtung nach Anspruch 1,
dadurch gekennzeichnet,
daß die Aufnahmeeinrichtung eine Anlagefläche, insbesondere Auflagefläche (50), gegen welche das Werkstückzahnrad (43) stirnseitig anlegbar ist, umfaßt.

3. Vorrichtung nach Anspruch 2,
dadurch gekennzeichnet,
daß die Anlagefläche (50) eine das Werkstückzahnrad (43) zentrierende Formung aufweist oder eben ist.

4. Vorrichtung nach Anspruch 2 oder 3,
dadurch gekennzeichnet,
daß die Anlagefläche (50) als Stirnfläche eines bewegbaren Stempels, insbesondere Hubstempels (13), für das Werkstückzahnrad (43) gebildet ist.

5. Vorrichtung nach einem der Ansprüche 2 bis 4,
dadurch gekennzeichnet,
daß in der Bearbeitungsposition das Werkstückzahnrad (43) gegen die Anlagefläche (50) und mit seiner anderen Stirnseite an einer Gegenanlagefläche (51) anliegt.

6. Vorrichtung nach einem der Ansprüche 1 bis 5,
dadurch gekennzeichnet,
daß eine Einrichtung zur Hin- und Herbewegung des Werkstückzahnrades (43) an der Bearbeitungsposition in Richtung der Zahnradachsen vorgesehen ist.

7. Vorrichtung nach Anspruch 5 oder 6,
dadurch gekennzeichnet,
daß die Gegenanlagefläche (51) als Stirnfläche eines über einen Exzenterantrieb (32) oder Kurbelantrieb (63) hin und her bewegbaren Stempels (31) und die Anlagefläche (50) gegen das Werkstückzahnrad (43), vorzugsweise über eine Feder (15), vorgespannt ist.

8. Vorrichtung nach Anspruch 7,
dadurch gekennzeichnet,
daß die Spannfeder (15) zwischen einem die Anlagefläche (50) aufweisenden Stempelkopfteil (14) und einem Stempelführungsteil (16) angeordnet ist.

9. Vorrichtung nach einem der Ansprüche 1 bis 8,
dadurch gekennzeichnet,
daß die Bewegungseinrichtung eine Transporteinrichtung (10) zum Antransport von Werkstückzahnrädern (43) in eine bei einer Bearbeitungsstation (5,6) gelegene Ausgangsposition, für die Weiterbeförderung in der genannten axialen Richtung in die Bearbeitungsposition, aufweist.

10. Vorrichtung nach Anspruch 9,
dadurch gekennzeichnet,
daß die Transporteinrichtung (10) zum Antransport der Werkstückzahnräder (43) auf einem Transportweg vereinzelt im Abstand zueinander vorgesehen und entlang dem Transportweg entsprechend dem Abstand mehrere Bearbeitungsstationen (5,6) angeordnet sind.

11. Vorrichtung nach Anspruch 10,
dadurch gekennzeichnet,
daß die Transporteinrichtung mit Einrichtungen zur Lagefixierung der Werkstückzahnräder versehen ist.

12. Vorrichtung nach einem der Ansprüche 9 bis 11,
dadurch gekennzeichnet,
daß die Transporteinrichtung einen die Werkstückzahnräder (43) auf einer Kreisbahn antransportierenden Drehplatte (10) umfaßt.

13. Vorrichtung nach Anspruch 12,
dadurch gekennzeichnet,
daß die Lagefixiereinrichtungen jeweils durch die zentrierenden Auflageflächen (50) eines Hubstempels (13), wobei an der Drehplatte (10) über den Kreisumfang verteilt Führungen (12) für jeweils einen Hubstempel (13) vorgesehen sind, oder durch auf der Drehplatte (10a) angeordnete, zur Anpassung an unterschiedliche Werkstückzahnradgrößen vorzugsweise austauschbare Taschen (60) gebildet sind.

14. Vorrichtung nach einem der Ansprüche 9 bis 13,
dadurch gekennzeichnet,
daß an der Bearbeitungsstation (5,6) unterhalb der Transporteinrichtung (10) eine Hubantriebseinrichtung (7) für den in der Führung (12) verschiebbaren Hubstempel (13) angeordnet ist.

15. Vorrichtung nach einem der Ansprüche 1 bis 14,
dadurch gekennzeichnet,
daß die Bearbeitungszahnräder wenigstens zum Teil in einem an der Bearbeitungsstation (5,6) lösbar montierten Wechselrahmen (17,18) gelagert sind.

16. Vorrichtung nach Anspruch 15,
dadurch gekennzeichnet,
daß der Wechselrahmen (17,18) eine Halterungsplatte (19) zur einseitigen Lagerung der Bearbeitungszahnräder (20-22) mit einer zentralen Öffnung (52) für den Eingriff des die Gegenanlagefläche (51) aufweisenden Stempels (31) umfaßt.

17. Vorrichtung nach Anspruch 15 oder 16,
dadurch gekennzeichnet,
daß eines (22) von drei in dem Wechselrahmen gelagerten Bearbeitungszahnrädern (20-22) in einer Richtung senkrecht zu seiner Drehachse zum Drücken des Werkstückzahnrads (43) in der Bearbeitungsposition gegen die anderen Bearbeitungszahnräder (20,21) verschiebbar ist.

18. Vorrichtung nach einem der Ansprüche 15 bis 17,
dadurch gekennzeichnet,
daß wenigstens eines (21;20a,21a) von in dem Wechselrahmen (17,18) gelagerten Bearbeitungszahnrädern (20-23) kardanisch gelagert ist.

19. Vorrichtung nach einem der Ansprüche 14 bis 18,
dadurch gekennzeichnet,
daß an einer Bearbeitungsstation (5a,6a) zur Anpassung an unterschiedliche Werkstückzahnradgrößen mehrere, die Anlage- und Gegenanlagefläche bildende Stempelpaare (13a,31a) vorgesehen und die Stempel (13a) der Paare wahlweise an die Hubantriebseinrichtung (7a) zum Befördern des Werkstückzahnrads in die Bearbeitungsposition sowie an die Einrichtung (63) zur Hin- und Herbewegung des Werkstückzahnrads an der Bearbeitungsposition ankoppelbar ist.

20. Vorrichtung nach Anspruch 19,
dadurch gekennzeichnet,
daß eines (22a) von drei Bearbeitungszahnrädern (20a bis 22a) an einem zum Befördern dieses Zahnrads (22a) in Eingriff mit dem Werkstückzahnrad (43a) schwenkbaren Hebel (71) gelagert ist, und die anderen Bearbeitungszahnräder (20,21a) an einer zum Eingriff mit dem Werkstückzahnrad (43a) linear über einen mit dem Hebel (71) zusammenarbeitenden Kniehebel (69) linear verschiebbaren Trägerhalterung (19a), die insbesondere als Wechselrahmen ausgebildet ist, gelagert sind.

21. Vorrichtung nach einem der Ansprüche 19 oder 20,
dadurch gekennzeichnet,
daß die Höhe der Bearbeitungsposition über der Drehplatte (10a) verstellbar ist.
